# EUROPEAN PATENT APPLICATION

(11) **EP 2 472 641 A1**
(43) Date of publication of application: **04.07.2012**
(21) Application number: 11006420.1
(22) Date of filing: 04.08.2011
(51) Int. Cl.: H01M 2/26, H01M 10/04, H01M 10/30

(54) **Nickel-zinc battery and manufacturing method thereof**

(30) Priority: 31.12.2010 US 930220
(71) Applicant: Ma, Fuyuan, Zhejiang 311121 (CN)
(72) Inventor: Ma, Fuyuan, Zhejiang 311121 (CN)
(74) Representative: Franks & Co Limited

(57) **Abstract**

A cylindrical Ni-Zn battery includes a battery shell, an electrode assembly and a liquid electrolyte which are sealed within the shell. The electrode assembly, whose upper part is connected to a cap, includes a nickel cathode, zinc anode, and a composite membrane. The nickel cathode and zinc anode have an edge portion which are externally exposed and bent inwardly to form the anode and cathode conductive end respectively, and edges of the composite membranes are sealed together, so that the electrodes are contained in the membranes. The battery is characterized by the simple in structure, convenient installation, low cost, safety, characteristics of long-term storage, effectively preventing the growth of dendrite, long life, strong capability to resist shake, and good performance of large current discharging.

## Description

### Background of the Present Invention

### Field of Invention

The present invention relates to a nickel-zinc battery and manufacturing method thereof, and more particularly to a rechargeable cylindrical Ni-Zn battery configuration which is capable of effectively eliminating the dendrites growth together with the unbalanced current distribution and deformation problems inside the Ni-Zn battery.

### Description of Related Arts

The growing environmental concerns and worsening of environmental situation have forced many countries to issue strict environmental regulations, making green and low-carbon economy become a trend. As the oil price remains high while internet and electronic products prosper, new growing markets of rechargeable batteries have emerged. Particularly, the fast growth of hybrid electric vehicle (HEV), plug-in hybrid electric vehicle (PHEV), and electric vehicle (EV) market have led to an urgent need of a kind of battery that is of higher energy, higher power, more stable and safer, and more environmental friendly. Conventional battery technologies, such as lead acid and nickelcadmium batteries, cannot meet the market needs in view of the new standard of environmental concerns. In addition, these conventional batteries are not in line with the requirements of environmental protection. Lithium batteries, though very successful in the portable electronic applications, cannot meet the requirements of large systems due to inadequate power, high price, and risk of safety.

The emerging nickel-zinc (Ni-Zn) battery technology has the potential to fulfill various application needs. A conventional Ni-Zn battery includes a battery shell, an electrode assembly and liquid electrolyte which are sealed within the shell. The electrode assembly includes a nickel cathode, a zinc anode, and a membrane between them. The nickel-zinc battery is a rechargeable battery with high power, higher energy without environmental pollution problems in relation to lead (Pb), cadmium (Cd) and/or mercury (Hg), while having a highly safety standard (non-flammable) and lowered cost of production.

While there are several benefits associated with nickel-zinc batteries, there are also disadvantages. For example, zinc dendrite growth is a common problem in nickel-zinc batteries and is a common source of battery failure. Zinc dendrites occur during battery recharging, where an active material, which is zinc oxide (ZnO), is reduced from its oxidized state and deposited onto a substrate (e.g., the electrode being charged) as zinc metal (Zn). Depending on the charging conditions, the metal may be deposited in a dendrite form. Most importantly, the dendrites formed have the potential to penetrate through the separator and act as a bridge directly connecting the negative and positive electrodes, and causing battery failure. Therefore, there is a need for nickel-zinc batteries to overcome dendrite growth.

Furthermore, the uneven current distribution in the nickel-zinc batteries is another reason for electrode deformation and dendrites growth problems. In the conventional design of a Ni-Zn battery, one or several tabs are taken as electrode conducting wires (generally called as tab) which is/are usually welded onto the current collector substrate and then connected to the cap and the steel shell of the battery. This method generates the problem of unbalanced distribution of current in which the current density is higher at a position closer to the tab and lower at a position farther away from the tab. Consequently, an electrode, especially the zinc anode, is very likely to distort in the charging and discharging processes respectively. Such a deformation caused by the unbalanced distribution of current possibly causes the growth of dendrite and short circuit, hence greatly reducing the cycle life of the battery. In addition, the current must take a long path of movement to reach all the parts of an electrode through the tab, resulting in low charging efficiency, large internal resistance and serious heating. Consequently, a large current discharge cannot be realized in the conventional nickel-zinc battery and its application is limited. Moreover, the membrane has poor temperature resistance in general and is easily damaged during welding process.

One development which is the dendrite-prevention membrane in conventional Ni-Zn batteries is used to overcome the growth of dendrite. However, this kind of dendrite-prevention membrane cannot withstand high temperature and is likely to be damaged in the welding process. In other words, the provision of dendrite-prevention membrane in the conventional Ni-Zn battery has further introduced manufacturing problems in view of the dedicate membrane and fails to provide a solution to the dendrite problem. Accordingly, there is a need for nickel-zinc batteries that overcome current unbalanced distribution and electrode deformation.

Many efforts have been made to reduce dendrite formation in nickel-zinc batteries. For examples, Adler et al. (U.S. Pat. Nos. 5,453,336 and 5,302,475) teach utilizing alkali metal-based fluoride salts and carbonate salts to reduce the shape change of the zinc electrode during recharging. Spaziante et al. (U.S. Pat. No. 4,181,777) disclose an additive such as polysaccharide or sorbitol to prevent zinc dendrite formation during charging of the battery. Berchielli et al. (U.S. Pat. No. 4,041,221) disclose inorganic titanate as an additive in the anode. Rampel (U.S. Pat. No. 3,954,501) discloses enhanced gas recombination, capacity and cycle life in a rechargeable electrolytic cell with the inclusion of a fibrous interconnecting network of an unsintered, uncoalesced, hydrophobic linear fluorocarbon polymer. Collien et al. (U.S. Pat. No. 6,087,030) disclose a zinc anode, including a reaction rate-enabling metal compound such as indium, gallium, germanium, tin, along with aqueous potassium hydroxide. Larsen et al. (U.S. Pat. No. 4,857,424) disclose an alkaline zinc electrochemical cell including a zinc corrosion and hydrogen gas inhibiting quantity of a siliconated, film-forming organic wetting agent. Charkey (U.S. Pat. No. 4,022,953) disclose a zinc electrode structure including cadmium, such as metallic cadmium or a cadmium compound electrochemically convertible to metallic cadmium dispersed in the zinc material, the metallic cadmium having a certain particle dimension and surface area. Charkey et al. (U.S. Pat. No. 5,863,676) disclose the use of a calcium-zincate constituent in a zinc electrode. Charkey (U.S. Pat. No. 5,556,720) disclose the use of barium hydroxide (Ba(OH)2)or strontium hydroxide (Sr(OH)2) material and a conductive matrix including a metallic oxide material which is more electropositive than zinc, such as lead oxide (PbO), bismuth oxide (Bi203), cadmium oxide (CdO), gallium oxide (Ga203), or thallium oxide (T1203). Charkey (U.S. Pat. No. 4.415,636) disclose cadmium particulate matter dispersed in the zinc material of the anode. Charkey (U.S. Pat. No. 4,332,871) disclose a zinc electrode including a cement additive distributed therein. Schrenk et al. (U.S. Pat. No. 4,791,036) disclose use of an anode current collector made from a silicon bronze alloy for minimizing gassing during overcharging. Gibbard et al. (U.S. Pat. No. 4,552,821) disclose a sealed and rechargeable nickel-zinc cell in the form of a wound roll, such that the cell is under compression. To prevent dendrites at the edges, cells with longitudinally-folded separator has been reported (US patent 20100062347).

While various methods and measures have been employed to prevent, delay, or eliminate the growth of dendrite in nickel-zinc batteries, there is no one effective solution to prevent dendrites growth at the edges. In the Ni-Zn battery assembly, the membrane applied between the anode and cathode is functioned as the dendrite-prevention purpose. A good membrane can play a very good role in preventing the growth of dendrite, but the dendrite can still grow at the edges of the anode and cathode, where the electrodes are open to the electrolyte. Usually, separators or membranes are often not sealed around electrodes, merely being disposed between the positive and negative electrodes. During charging, the exposed portion of the anode has more tendency to form zinc dendrites. i.e., dendrites grow around the open anode and easily touch the adjacent cathode or even the cell shell. If the positive electrode also touches the shell, a short circuit will occur. To prevent the growth of dendrite at the edges, the dendrite-prevention membrane can be folded at the edges, as employed in the longitudinally-folded approach, but the method will result in the difficulties of assembly or the membrane might be damaged during folding. Accordingly, there is a need for an effective way to prevent dendrite growth from the exposed portion of the electrodes.

### Summary of the Present Invention

The invention is advantageous in that it provides a Ni-Zn battery which is structurally configured to effectively prevent the growth of dendrite and provide good performance under high rate discharging, while the manufacture method of the Ni-Zn battery is simple and the assembly of different parts is convenient and does not require high level of skill or preciseness.

Another advantage of the invention is to provide a Ni-Zn battery to overcome the weakness of the present technologies, which is to solve the problems of dendrite growth, cell deformation and unbalanced current flow in the Ni-Zn battery.

Another advantage of the invention is to provide a Ni-Zn battery which is a rechargeable battery capable of large current discharge to provide high and adequate power and energy without causing environmental pollution problems in relation to lead (Pb), cadmium (Cd) and mercury (Hg), while having a highly safety standard (non-flammable) and lowered cost of production.

Another advantage of the invention is to provide a manufacture method of a cylindrical Ni-Zn battery which is environmental friendly but efficient in which organic solvent is avoided and the risk welding which may induce a damaging effect to the membrane is minimized.

Additional advantages and features of the invention will become apparent from the description which follows, and may be realized by means of the instrumentalities and combinations particular point out in the appended claims.

According to the present invention, the foregoing and other objects and advantages are attained by a method of manufacture for a cylindrical nickel-zinc battery which includes a casing having a shell cavity and defining a shell opening at a lower end of said casing, comprising the steps of:

(a.1) providing a nickel cathode; wherein said nickel cathode has an elongated and sheet-like body to define a main portion, an edge portion at a first side and a folding line at the junction between said main portion and said edge portion, wherein said edge portion of said nickel cathode is between 0.5 to 50 millimeters;

(a.2) providing a zinc anode, wherein said zinc anode has an elongated and sheet-like body to define a main portion, an edge portion at a first side and a folding line at the junction between said main portion and said edge portion wherein said edge portion of said zinc anode is between 0.5 to 50 millimeters;

(b) preparing and providing a microporous and composite membrane and a layer of electrolyte absorption fabric;

(c) laying said membrane with said layer of electrolyte absorption fabric between said nickel cathode and said zinc anode;

(d) rolling said zinc anode, said nickel cathode and said membrane with said layer of electrolyte absorption fabric into an electrode assembly in such a manner that said edge portion of said nickel cathode is extended outside said electrode assembly at a first end, and said edge portion of said zinc anode is extended outside said electrode assembly at a second end;

(e) pressing said edge portion of said nickel cathode from outside to inside to form a flat cathode conductive surface and pressing the edge portion of said zinc anode from outside to inside to form a flat anode conductive surface;

(f) providing an anode current collector to an upper end of the electrode assembly such that said anode current collector is in physical contact with said anode conductive surface, and a cathode current collector to a lower end of said electrode assembly such that said cathode current collector is in physical contact with said cathode conductive surface;

(g) applying an alkali resistance insulating tape to completely covers an outermost exterior surface of said electrode assembly such that said zinc anode is completely shielded from said casing, and\

(h) sealing said electrode assembly inside said shell cavity of said casing with a nickel plated bottom unit to form said cylindrical nickel-zinc battery.

In accordance with another aspect of the invention, the present invention comprises a nickel-zinc battery, comprising:

a casing having a shell cavity and defining a shell opening at a lower end of said casing which comprises a cap unit at an upper end of said casing and a bottom unit sealing said shell opening at said lower end for forming a sealed battery shell;

an electrode assembly sealed and received inside said casing, comprising:

a nickel cathode,

a zinc anode, which has an elongated and sheet-like body to define a main portion, an edge portion at a first side and a folding line at the junction between said main portion and said edge portion, wherein said elongated and sheet-like body is arranged to roll into a cylindrical structure defining a folded condition in which said edge portion is folded along said folding line inwardly to form a flat surface on said side of said edge portion of said cylindrical structure, and

a membrane positioned between said nickel cathode and said zinc anode, physically separating said nickel cathode and said zinc anode; and

an electrolyte received inside said shell cavity for communications between said zinc anode and said nickel cathode.

Still further objects and advantages will become apparent from a consideration of the ensuing description and drawings.

These and other objectives, features, and advantages of the present invention will become apparent from the following detailed description, the accompanying drawings, and the appended claims.

### Brief Description of the Drawings

Fig. 1 is an illustration of a nickel-zinc battery according to a preferred embodiment of the present invention.

Figure 2A and 2B are illustrations of Zn anode of a nickel-zinc battery according to the above preferred embodiment of the present invention.

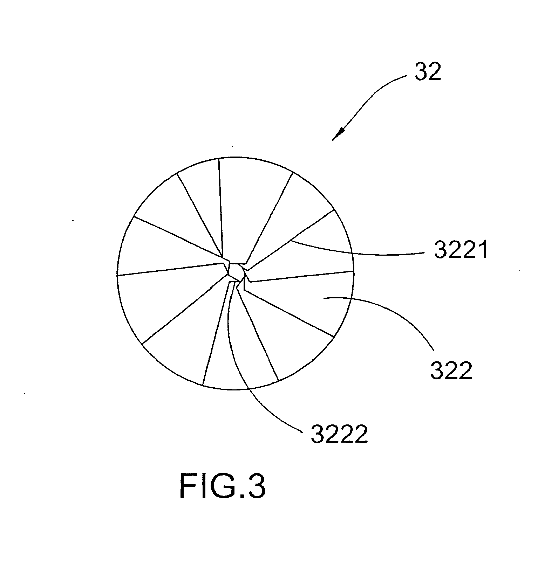

Figure 3 is an illustration of Zn anode in a folded condition of a nickel-zinc battery according to the above preferred embodiment of the present invention.

Figure 4A and 4B are illustrations of nickel cathode of a nickel-zinc battery according to the above preferred embodiment of the present invention.

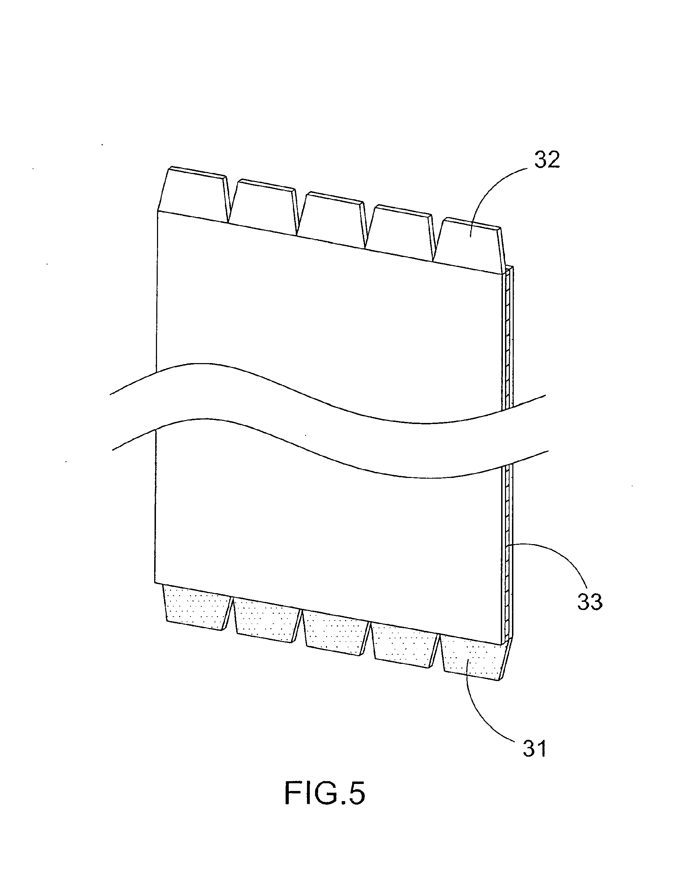

Figure 5 is an illustration of an electrode assembly of a nickel-zinc battery according to the above preferred embodiment of the present invention.

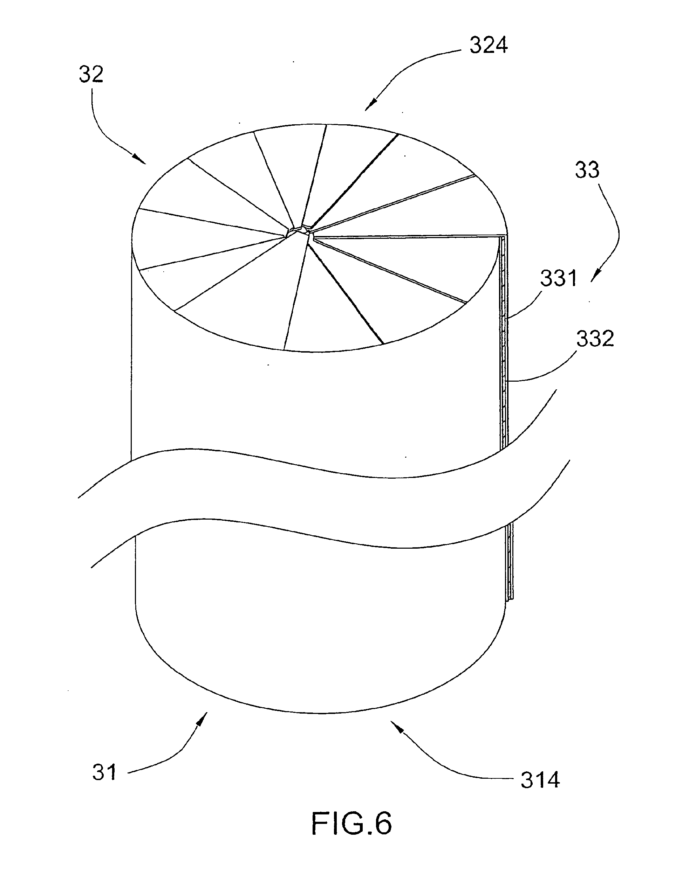

Figure 6 is an illustration of an electrode assembly in a folded condition of a nickel-zinc battery according to the above preferred embodiment of the present invention.

### Detailed Description of the Preferred Embodiment

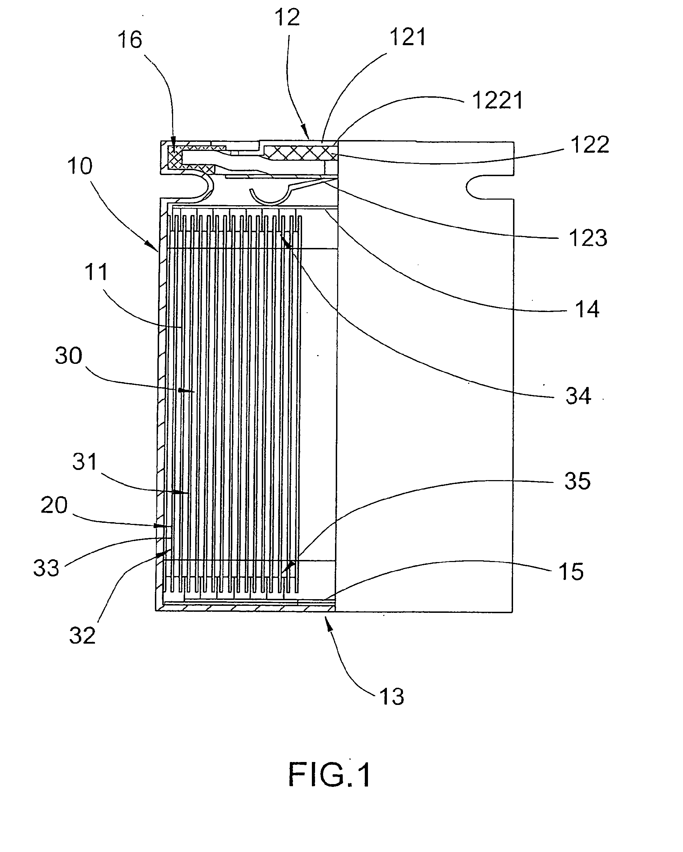

Referring to Fig. 1 of the drawings, a nickel-zinc battery according to a preferred embodiment of the present invention comprises a casing 10, an electrode assembly 30 and an electrolyte 20.

The casing 10 is a battery shell having a shell cavity 11 and comprising a cap unit 12 at an upper end, a bottom unit 13 opposite to the cap unit 12, an anode current collector 14 connecting between the cap 12 and the electrode assembly 30, a cathode current collector 15 connecting between the bottom unit 13 and the electrode assembly 30, and a sealing ring 16 connected to the cap 12.

The electrode assembly 30 and the electrolyte 20 is received and sealed inside the casing 10. Preferably, the casing 10 is a cylindrical body, the cap unit 12 is protruded from an upper end of the casing 10 and the bottom unit 13 is protruded from a bottom end of the casing 10. The electrode assembly 30 comprises a nickel cathode 31, a zinc anode 32, and a membrane 33 separating the nickel cathode 31 and the zinc anode 32 and further defines a first end 34 and a second end 35 opposite to the first end 34. Preferably, the electrode assembly 30 has a generally cylindrical body formed by the nickel cathode 31, the zinc anode 32 and the membrane 33.

Preferably, the first end 34 of the electrode assembly 30 is on the upper side which provides an anode conductive metal end and is connected to the anode current collector 14, and the second end 35 of the electrode assembly 30 is at the bottom side which provides a cathode conductive metal end and is connected to the cathode current collector 15. The anode current collector 14 is connected through the sealing ring 16 to the cap 12. Preferably, the sealing ring 16 has a layered body made of nylon.

The cap 12 comprises an upper component 121, lower component 123, and interim anti-explosion valve 122.

The upper cap component 121 is made from stainless steel or steel with nickel plating. The surface of the upper cap component 121 is coated with Cu, Ni, Sn, Ag, Bi, In, Pb, Pt, Sb, Se, Ti, or an alloy thereof to ensure that battery will not be influenced and decayed by the external environment.

The cap anti-explosion valve 122, which is made from nitrile rubber, polyurethane, and ethylene propylene diene monomer, is placed between the upper and lower cap components 121, 123, and has a plurality of passages 1221 which are air-releasing holes in the valve 122 and are arranged to symmetrically distributed along from the cap 12 as the center. The function of the valve 122 is to discharge the internal pressure when under an accident. The preferred material for the valve 122 is selected from ethylene propylene-diene monomer or nitrile butadiene.

The lower cap component 123 is made from stainless steel or steel with nickel plating and its surface is coated with Ag, Cu, In, Pb, Sn, Zn, or an alloy thereof, to prevent the formation of a micro cell with hydrogen emission between the cap 12 and the anode, and particularly, the pressing point of the anode.

The materials for anode current collector 14 can be made from stainless steel, spring steel, steel belt with nickel plating, iron with nickel plating, copper, brass, Ni, In, tin, and Ag foils, or an alloy thereof, in which spring steel and Be-Cu are the preferred materials. The surface of the anode current collector 14 is coated with Ag, Sn, Cu, Bi, Pb, In, Ni, Pt, Sb, Se, Ti, Ga, Cr, Ge or an alloy thereof, in which Ag, In, and Sn are preferred such that hydrogen evolution from the anode current collector 14 is prevented, and therefore, the internal pressure inside the battery will be reduced to ensure the safety, long-term storage, recovery and of reversibility of the Zn electrode. The anode current collector 14 is first welded with the lower cap component 123 and then touches with the surface of the first side 34 (the anode side) of the electrode assembly 30 through physical contact. The anode current collector material should have an excellent flexibility and elasticity, so that a good contact would be made between the electrode assembly 30 and the cap 12 to greatly reduce the internal resistance and increase the capability of high rate discharging.

The cathode current collector 15 is composed of stainless steel, spring steel, steel belt with nickel plating, iron with nickel plating, copper, brass, Ni, Zn, tin, and Ag foils, or an alloy thereof; and the surface of the cathode current collector 15 is coated with Ag, Ni, Sb, Se, Ti, Cu, Zn, In, Sn, or an alloy thereof. The cathode current collector 15 is first welded to the casing 10 which will then touch the surface of the second end 35 (cathode side) of the electrode assembly 30 through physical contact. The material should have an excellent flexibility and elasticity, so that a good contact would be made between the electrode assembly and the casing 10 to greatly reduce the internal resistance and increase the capability of high rate discharging.

The sealing ring 16 is made from PP, PE, or other materials resisting alkali and high temperature, and is positioned between the lower cap component 123 and the anode current collector 14. The surface of the sealing ring 16 is coated with one or several of sealing compounds, selected from modified electrolytic asphalt, aeronautic paraffine, liquid paraffine, and special sealing glue. The sealing ring 16 ensures that the battery will not leak the alkali electrolyte during long-term storage and usage. The preferred materials are PP and PE respectively.

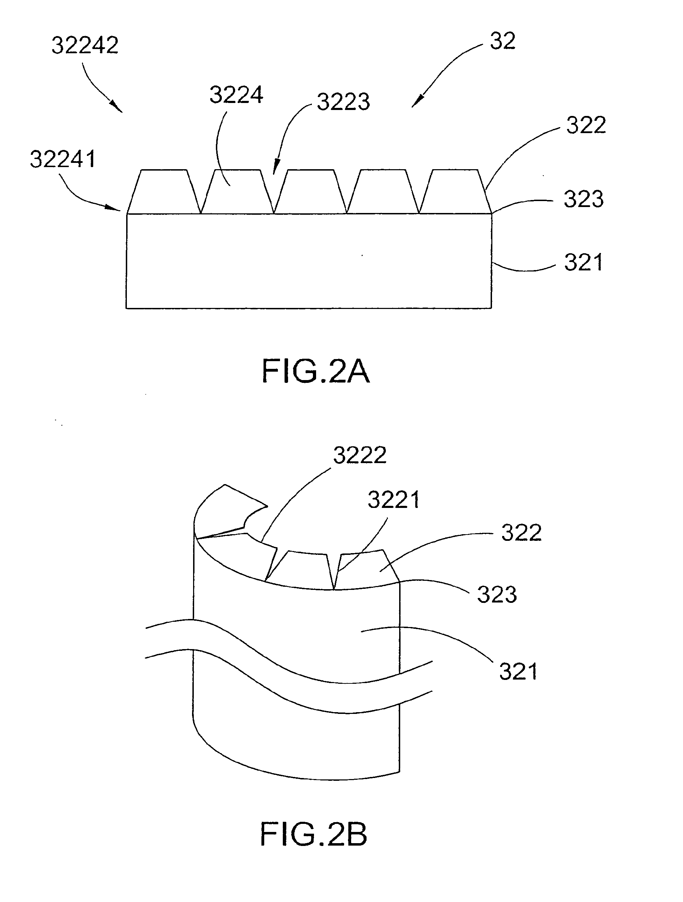

Referring to Figs. 2A and 2B of the drawings, the zinc anode 32 has an elongated and sheet-like body, defining a main portion 321, an edge portion 322 on one side and a folding line 333 at the junction between the main portion 321 and the edge portion 322, wherein the elongated and sheet-like body of the zinc anode 32 is arranged to roll into a cylindrical structure in a folded condition, the edge portion 322 is arranged to fold along the folding line 323 inwardly in such a manner that the edge portion 322 forms a flat surface 324 on one end of the cylindrical structure and is transversely extended from the main portion 321 in the folded condition.

In particular, the edge portion 322 has a plurality of indentions 3223 and a plurality of connecting edge 3221 such that when the edge portion 322 is folded inwardly in the folded condition, two adjacently positioned connecting edges 3221 is fitting with each other to form a flat surface 3221. In other words, each of the two connecting edges 3221 is fittingly biased against each other in the folded position and the flat surface 3221 is perpendicular to the main portion 321.

It is worth mentioning that the edge portion 322 is formed by a plurality of edge unit 3224, wherein each two adjacently positioned edge unit 3224 defines one indention 3223 and each of the edge unit 3224 defines two connecting edges 3221. Preferably, the edge unit 3224 is trapezium in shape defining a first side 32241 on the folding line 323 and a second side 32242 opposite and parallel to the first side 32241, wherein a length of the second side 32242 is smaller than a length of the first side 32241, and the connecting edge 3221 is extended between the first side 32241 and the second side 32242. When the edge units 3224 are folded inwardly at an angle of 90° in the folded condition, each two adjacently positioned edge unit 3224 are fitted to form one flat surface 324 of even thickness through the corresponding connecting edges 3221 respectively. In other words, the edge units 3224 is so designed to a pattern, which is shown in Fig. 2A, so that the edge units 3224 will not overlap with each other in the folded condition, and the flat surface 324, which is a smooth and one flat layer of conductive metal surface, on a first end 34 of the electrode assembly 30 is formed. The designed pattern is important that otherwise overlapping occurred and cause electrical shorting due to the thickness increase of the bent layer.

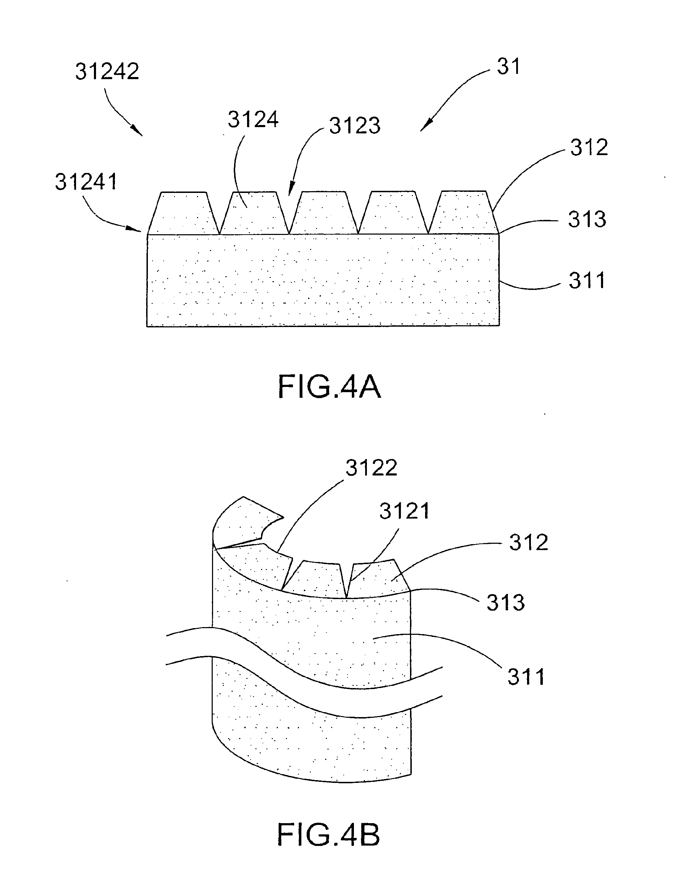

Preferably, the nickel cathode 31 has a similar structure as the zinc anode 32. Referring to Figs. 4A and 4B of the drawings, the nickel cathode 31 has an elongated and sheet-like body, defining a main portion 311, an edge portion 312 on one side and a folding line 313 at the junction between the main portion 311 and the edge portion 312, wherein the elongated and sheet-like body of the nickel cathode 31 is arranged to roll into a cylindrical structure in a folded condition, the edge portion 312 is arranged to fold along the folding line 313 inwardly in such a manner that the edge portion 312 forms a flat surface 314 on one end of the cylindrical structure and is transversely extended from the main portion 311 in the folded condition.

In particular, the edge portion 312 of the nickel cathode 31 has a plurality of indentions 3123 and a plurality of connecting edge 3121 such that when the edge portion 312 is folded inwardly in the folded condition, two adjacently positioned connecting edges 3121 is fitting with each other to form a flat surface 3121. In other words, each of the two connecting edges 3121 is fittingly biased against each other in the folded position and the flat surface 3121 is perpendicular to the main portion 311.

It is worth mentioning that the edge portion 312 of the nickel cathode 31 is formed by a plurality of edge unit 3124, wherein each two adjacently positioned edge unit 3124 defines one indention 3123 and each of the edge unit 3124 defines two connecting edges 3121. Preferably, the edge unit 3124 is trapezium in shape defining a first side 31241 on the folding line 313 and a second side 31242 opposite and parallel to the first side 31241, wherein a length of the second side 31242 is smaller than a length of the first side 31241, and the connecting edge 3121 is extended between the first side 31241 and the second side 31242. When the edge units 3124 are folded inwardly at an angle of 90° in the folded condition, each two adjacently positioned edge unit 3124 are fitted to form one flat surface 314 of even thickness through the corresponding connecting edges 3121 respectively. In other words, the edge units 3124 is so designed to a pattern, which is shown in Fig. 4A, so that the edge units 3124 will not overlap with each others in the folded condition, and the flat surface 314, which is a smooth and one flat layer of conductive metal surface, on a second end 35 opposite to the first end 34 of the electrode assembly 30 is formed. The designed pattern is important that otherwise overlapping occurred and cause electrical shorting due to the thickness increase of the bent layer.

It is worth mentioning that in the electrode assembly 30, the anode 32 is longer than the cathode 31, so that the anode 32 can completely cover the cathode 31 such that oxygen generated from the cathode 31 during charging can be absorbed.

The membrane 33 is positioned between the nickel cathode 31 and the zinc anode 32 which is the middle layer for physically separating the nickel cathode 31 and the zinc anode 32 in a sealed manner. Preferably, the member 33 is a composite membrane having an electrolyte-containing function.

In particular, the membrane 33 has provides two sealing edges 331 which is arranged to be sealed through a joint agent 332. In other words, when the membrane 33 is assembled, the two adjacent membranes 33 at the edges keep close to each other and a joint agent is applied to the surface of the membrane 33 so that the two adjacent membranes 33 are sealed together and the electrodes of anode 32 and cathode 31 are wrapped within the sealed membrane 33.

Preferably, a binder 333 is first applied to the sealing edges 331 of the membrane 33 before the membrane 33 is assembled with the anode 32 and the cathode 31 to form the electrode assembly 30, and then the two adjacent membranes 33 are glued together after the cathode 31 and the anode 32 is aligned and folded into position. By virtue of this method, the anode 32 and cathode 31 are completely insulated with each other. Hence, mutual pollution between anode 31 and cathode 32 is avoided, hence reducing gas emission.

In particular, the membrane 33 is preferably a microporous membrane, which is composed of PP and/or PE, and is hydrophilic treated before the membrane 33 is assembled with the anode 32 and the cathode 31 to form the electrode assembly 30, and the binder 333, which is a type of binding materials such as MC, CMC, HPMC, PVA, PV, and PTFE etc, is applied at the sealing edges 331 of the membrane 30 to glue the two adjacent membranes 33 together. Then, a sheet of electrolyte absorbing material 334 which is made of vinylon, polypropylene or non-woven fabric is welded or dry adhered to one side of the membrane 33 to form a composite membrane which has electrolyte-containing function.

It is worth mentioning that the microporous membrane is used to prevent dendrites growth at the zinc anode 32. The membrane 33 is a dendrites-prevention membrane which is capable of effective preventing dendrites growth at the zinc anode 32. Notwithstanding that membrane 33 is one of the key components for the nickel-zinc batteries, there is no one effective, simple and low cost membrane in the market to effectively blocking dendrites growth. There exist a lot of membranes available, but most of them do not have dendrites blocking effect. Some complicated and high-end membranes in the market have certain dendrites preventing effect but they are very expensive and not very effective. When used, the low cost advantage of the nickel-zinc battery is compromised.

Preferably, the membrane 33, which is a type of dendrite-prevention membrane, is arranged to contain the anode 32. Once the dendrite-prevention membrane has the adequate function to prevent the growth of dendrites, the dendrite crystal is unable to grow at the sealing edge 331 of the membrane 30. Such a seal is important that dendrites will not grow at the edges, which is one of the major drawbacks in the prior arts. In other words, the present invention simplifies the assembly process as well as increases the life of a battery.

The membrane 33, which serves as dendrites-prevention membrane, in the nickel-zinc battery of the present invention has certain structures.

First of all, the membrane 33 must have certain pore structure and the membrane 33 must have gas and electrolyte permeation ability. Micro sized pores are required. When the pore size is too big, it is easy to allow the dendrites to go through; when the pore size is too small, the permeability cannot meet the requirements. The most suitable pore size is in the range of 30 - 50 microns and it is required that the pores are evenly distributed.

Moreover, the membrane 33 must have certain thickness. If the membrane 33 its too thin, dendrites can easily go through. When the membrane 33 is too thick, the internal resistance will be too large, i.e. the electrolyte permeation is too small or too slow. The most suitable thickness is in the range of 30 - 60 microns. Therefore, the membrane 33 preferably has a thickness generally about 30 - 60 microns to guard against dendrite growth while preserving permeability.

It is important to treat the hydrophobic member to become hydrophilic for use in the present invention. To make these hydrophobic membranes to hydrophilic, conventional arts make use of radiation or grafting technologies. However, the disadvantages by using these methods are as follows: (1) they are expensive; (2) water affinity ability of the membrane is not very good; and (3) internal resistance is relatively high. Therefore, there is a need to have a technology to make the membrane 33 from hydrophobic to hydrophilic with a simple, low cost and high quality method.

Technologies have been developed to treat hydrophobic membranes to hydrophilic. US patents 4359510, 4438185, 6479190, and 20050208372, teach that the lithium-ion membranes, which are hydrophobic, are treated to hydrophilic in liquid systems with organic solvent such as acetone. These liquid systems use massive organic solvents which require high level of preventive measures during handling, and is inconvenient and harmful. The method of the present invention uses water as the solvent. Water systems are easy to operate and harmless to human beings. In addition, the manufacture cost involved is low. More importantly, the membrane 33 treated from water system is more suitable for nickel-zinc batteries. In other words, the present invention further provides a low cost but highly efficiently manufacture method for producing the membrane 33 of the present invention.

The membrane 33, which is treated with water system, is more desirable for use in the nickel-zinc battery of the present invention because the electrolyte in the nickel-zinc battery is aqueous alkaline; and the membrane 33 treated from water has a better electrolyte permeability and is more uniform in distribution so that the resulting membrane 33, when compared to membrane treated with organic solvent, has more even current distribution and less internal resistance so that the membrane 33 of the present invention is suitable for high power discharging. Accordingly, the membrane 33 which is treated with water system is low cost, easy to operate, and has high efficiency of production.

The composite membrane 33 takes form through welding or dry adhesion by one or several of materials such as MC, CMC, HPMC, PVA, PV, and PTFE etc between the microporous membrane after hydrophilic treatment, which is composed of a PP and/or PE, and a liquid membrane of vinylon, polypropylene or non-woven fabric. The strength of this method is that the single layer makes the battery assembly easier to operate, while ensuring the accordance of the battery and increasing the production efficiency by 5% to 100%.

The microporous membrane is preferably selected from PP, PE, or the composite material thereof. The non-woven fabric is preferably selected from polypropylene non-woven. And the composition methods of two membranes are preferably selected from high frequency welding.

Preferably, the nickel cathode 32 is a composition that contains NiOOH, nickel metal, and a binder. Ruthenium oxide (Ru02) and/or other transition metal oxide are added as additives in the cathode. Metal oxide or hydroxide with a rare earth oxide may be included in the cathode to improve the electrode capacity and shelf life. Optionally, zinc oxide may be added to the cathode to facilitate charger transfer and improve the characteristics of high rate discharging. The resulting nickel cathode 31 of the present invention significantly increases the charging efficiency, promoting the overpotential of oxygen evolution, and intensifying the depth of discharging.

Preferably, the zinc anode 31 is a composition that contains ZnO, Zn metal powder, and a binder. Bismuth oxide (Bi203) and/or indium oxide (In203) are added as additives in the anode. Metal oxide or hydroxide, such as aluminum oxide (A1203), may be included in the anode to improve the electrode capacity and shelf life. Optionally, Ca(OH)2 may be added to the anode to facilitate charger transfer and improve the cycle life of the anode. The anode significantly eliminates the dendrites generated at the anode and increases the cycle life of the battery.

In particular, the manufacturing method for the cylindrical Ni-Zn battery which includes a casing comprises the steps of:

(a) preparing a Ni cathode and a Zn anode;

(b) preparing and providing a microporous membrane composite and a layer of electrolyte absorption fabric;

(c) laying the membrane with the layer of electrolyte absorption fabric between the cathode and the anode;

(d) rolling the anode, the cathode and the membrane with the layer of electrolyte absorption fabric into an electrode assembly, wherein the Ni cathode has an uncovered edge extended outside of the electrode assembly by 0.5 to 50 millimeters and the Zn cathode has an uncovered edge extended outside of the electrode assembly by 0.5 to 50 millimeters,

(e) pressing the uncovered edge of the nickel cathode from outside to inside to form a flat cathode conductive surface; and pressing the uncovered edge of the zinc anode from outside to inside to form a flat anode conductive surface;

(f) providing an anode current collector to an upper end of the electrode assembly through physical contact of the anode conductive surface, and a cathode current collector to a lower end of the electrode assembly through physical contact of the cathode conductive surface,

(g) applying an alkali resistance insulating tape to completely covers the outermost exterior of the electrode assembly such that the zinc anode is completely shielded from the casing, which is a steel shell, and

(h) sealing the casing with a nickel plated to form the battery.

The alkali resistance insulation tape can be made from one or several materials like PP, PE, PTFE, and nylon, and is preferably selected from PP and PE. One side of the tape is adhesive, and the other side is very smooth. In addition, the tape is stable in 40% KOH solution under a temperature of 80°C for 12 hours, and its distortion rate in 40% KOH is. It can effectively insulate the steel shell from the anode and avoid the short circuit or hydrogen evolution reaction.

It is worth mentioning that the current collectors of anode and cathode are joined together through welding the anode current collector to the cap and cathode current collector to the battery shell. Then the electrode assembly and current collectors or pressure spring are pressed together. Consequently, the entire electrode assembly plays the role of current transmission with a very balanced distribution of current, which is very suitable for high rate discharge.

Due to the balanced current distribution, the battery employing this assembly method can avoid the polarization resulting from unbalanced distribution of current. The method can greatly reduce the shape change of battery electrodes in charging and recharging processes, while the balanced distribution of current will greatly reduce the chances of the growth of dendrite. Accordingly, the cycling life of the battery produced is greatly increased.

It is worth mentioning that the insulating layer, especially the dendrite-prevention membrane, is not likely to be destroyed or damaged because the membrane is separated from the welding process during manufacture. In the assembly of the battery, the dendrite-prevention membrane and electrodes are rolled together to form the electrode assembly, while the connection between the electrode assembly and cap or battery shell is realized by the sticking of current collectors into the assembly.

The balance of current in a Ni-Zn battery is one of the key factors reducing the shape change of anode and preventing the growth of dendrite. It is achieved through a good contact of the electrode assembly surfaces to the current collectors. Preferably, the Nickel plate with certain pattern is designed to use as the current collector to connect the nickel cathode to the casing. Beryllium-bronze (Be-bronze) plate is designed in a spring pattern to serve as the bridge to conduct electrons between anode surface to the cap. The Be-bronze is coated with anti-corrosion materials such as Sn, Sn-Cu alloy, Ag, Pb, Bi, or an alloy.

It is worth mentioning that the designed pattern of the edges of the electrodes, especially the anode, is important to prevent the overlapping and electrical shorting due to the thickness increase of the bent layer. In the assembly, the two adjacent membranes at the edges keep close to each other and a joint agent is applied to the surface of the membrane so that the two adjacent membranes are sealed together and the electrodes of anode and cathode are wrapped within the sealed membrane. Such a seal is so important so that dendrites will not grow at the edge.

One skilled in the art will understand that the embodiment of the present invention as shown in the drawings and described above is exemplary only and not intended to be limiting.

It will thus be seen that the objects of the present invention have been fully and effectively accomplished. It embodiments have been shown and described for the purposes of illustrating the functional and structural principles of the present invention and is subject to change without departure from such principles. Therefore, this invention includes all modifications encompassed within the spirit and scope of the following claims.

## Claims

1. A nickel-zinc battery, comprising:
a casing having a shell cavity and defining a shell opening at a lower end of said casing which comprises a cap unit at an upper end of said casing and a bottom unit sealing said shell opening at said lower end for forming a sealed battery shell;
an electrode assembly sealed and received inside said casing, comprising:
a nickel cathode,
a zinc anode, which has an elongated and sheet-like body to define a main portion, an edge portion at a first side and a folding line at the junction between said main portion and said edge portion, wherein said elongated and sheet-like body is arranged to roll into a cylindrical structure defining a folded condition in which said edge portion is folded along said folding line inwardly to form a flat surface on said side of said edge portion of said cylindrical structure, and
a membrane positioned between said nickel cathode and said zinc anode, physically separating said nickel cathode and said zinc anode; and
an electrolyte received inside said shell cavity for communications between said zinc anode and said nickel cathode.

2. The nickel-zinc battery, as recited in claim 1, wherein said edge portion of said anode has a plurality of indentions and a plurality of connecting edge such that when said edge portion is folded inwardly in said folded condition, two of said adjacently positioned connecting edges are fittingly biasing against each other to form said flat surface.

3. The nickel-zinc battery, as recited in claim 2, wherein said edge portion is formed by a plurality of edge units for defining one said indention between two said adjacently positioned edge units and two said connecting edges in one said edge unit, wherein each of said edge units is trapezium in shape defining a first side on said folding line and a second side opposite and parallel to said first side of said edge unit, wherein a length of said second side is smaller than a length of said first side of said edge unit, and two said connecting edges are extended between said first side and said second side of each said corresponding edge unit.

4. The nickel-zinc battery, as recited in claim 2, wherein each of said edge units is folded inwardly at an angle of 90 degree such that said flat surface has an even thickness at said zinc anode, and a height of each said edge unit, which is the distance between said first side and said second side of said edge unit, is 0.5 to 50 millimeters.

5. The nickel-zinc battery, as recited in claim 2, wherein said membrane is a composite membrane which has two sealing edges which are sealed together for containing said zinc anode such that said zinc anode is wrapped inside said membrane and said zinc anode and said nickel cathode are completely insulated with each other.

6. The nickel-zinc battery, as recited in claim 4, wherein said membrane is a composite membrane which has two sealing edges which are sealed together for containing said zinc anode such that said zinc anode is wrapped inside said membrane and said zinc anode and said nickel cathode are completely insulated with each other.

7. The nickel-zinc battery, as recited in claim 4, wherein said nickel cathode has an elongated and sheet-like body to define a main portion, an edge portion at a first side and a folding line at the junction between said main portion and said edge portion, wherein said elongated and sheet-like body is arranged to roll into a cylindrical structure defining a folded condition in which said edge portion is folded along said folding line inwardly to form a flat surface on said side of said edge portion of said cylindrical structure of said nickel cathode.

8. The nickel-zinc battery, as recited in claim 5, wherein said nickel cathode has an elongated and sheet-like body to define a main portion, an edge portion at a first side and
a folding line at the junction between said main portion and said edge portion, wherein said elongated and sheet-like body is arranged to roll into a cylindrical structure defining a folded condition in which said edge portion is folded along said folding line inwardly to form a flat surface on said side of said edge portion of said cylindrical structure of said nickel cathode.

9. The nickel-zinc battery, as recited in claim 8, wherein each of said edge units of said nickel cathode is folded inwardly at an angle of 90 degree such that said flat surface of said cathode has an even thickness at said nickel cathode, and a height of each said edge unit of said nickel cathode, which is the distance between said first side and said second side of said edge unit of said nickel cathode, is 0.5 to 50 millimeters.

10. The nickel-zinc battery, as recited in claim 6, further comprising an anode current collector connecting between said cap unit and said zinc anode, and a cathode current collector connecting said bottom unit and said nickel cathode.

11. The nickel-zinc battery, as recited in claim 9, further comprising an anode current collector connecting between said cap unit and said zinc anode, and a cathode current collector connecting said bottom unit and said nickel cathode.

12. The nickel-zinc battery, as recited in claim 10, further comprising a sealing ring through which said anode current collector is connected to said cap unit.

13. The nickel-zinc battery, as recited in claim 11, further comprising a sealing ring through which said anode current collector is connected to said cap unit.

14. The nickel-zinc battery, as recited in claim 5, wherein said membrane is a hydrophilic membrane prepared by treating with water system.

15. The nickel-zinc battery, as recited in claim 8, wherein said membrane has a thickness between 30 and 60 microns and a plurality of pores evenly distributed in said member,
wherein each of said pore has a pore size between 30 and 50 microns, wherein said membrane is a hydrophilic membrane prepared by treating with water system.

16. The nickel-zinc battery, as recited in claim 12, wherein said membrane has a thickness between 30 and 60 microns and a plurality of pores evenly distributed in said member, wherein each of said pore has a pore size between 30 and 50 microns, wherein said membrane is a hydrophilic membrane prepared by treating with water system.

17. A method of manufacture for a cylindrical nickel-zinc battery which includes a casing having a shell cavity and defining a shell opening at a lower end of said casing, comprising the steps of:
(a.1) providing a nickel cathode; wherein said nickel cathode has an elongated and sheet-like body to define a main portion, an edge portion at a first side and a folding line at the junction between said main portion and said edge portion, wherein said edge portion of said nickel cathode is between 0.5 to 50 millimeters;
(a.2) providing a zinc anode, wherein said zinc anode has an elongated and sheet-like body to define a main portion, an edge portion at a first side and a folding line at the junction between said main portion and said edge portion wherein said edge portion of said zinc anode is between 0.5 to 50 millimeters;
(b) preparing and providing a microporous and composite membrane and a layer of electrolyte absorption fabric;
(c) laying said membrane with said layer of electrolyte absorption fabric between said nickel cathode and said zinc anode;
(d) rolling said zinc anode, said nickel cathode and said membrane with said layer of electrolyte absorption fabric into an electrode assembly in such a manner that said edge portion of said nickel cathode is extended outside said electrode assembly at a first end, and said edge portion of said zinc anode is extended outside said electrode assembly at a second end;
(e) pressing said edge portion of said nickel cathode from outside to inside to form a flat cathode conductive surface and pressing the edge portion of said zinc anode from outside to inside to form a flat anode conductive surface;
(f) providing an anode current collector to an upper end of the electrode assembly such that said anode current collector is in physical contact with said anode conductive surface, and a cathode current collector to a lower end of said electrode assembly such that said cathode current collector is in physical contact with said cathode conductive surface;
(g) applying an alkali resistance insulating tape to completely covers an outermost exterior surface of said electrode assembly such that said zinc anode is completely shielded from said casing, and
(h) sealing said electrode assembly inside said shell cavity of said casing with a nickel plated bottom unit to form said cylindrical nickel-zinc battery.

18. The method, as recited in claim 17, wherein said casing comprises a cap unit at an upper end of said casing, wherein in the step (h), said anode current collector is welded to said cap unit and said cathode current collector is welded to said bottom unit, and said electrode assembly and said anode and cathode current collectors are pressed together.

19. The method, as recited in claim 18, wherein in the step (b), said membrane is a hydrophilic membrane prepared by treating with water system.

20. The method, as recited in claim 19, wherein in the step (b), said membrane has a thickness between 30 and 60 microns and a plurality of pores evenly distributed in said member, wherein each of said pore has a pore size between 30 and 50 microns.
